# EUROPEAN PATENT SPECIFICATION

(11) **EP 2 852 653 B1**
(45) Date of publication and mention of the grant of the patent: **13.07.2016**
(21) Application number: 13723109.8
(22) Date of filing: 14.05.2013
(51) Int. Cl.: C09K 8/584, C09K 8/60, C09K 8/90, C09K 8/68, C09K 8/74, B01F 17/00

(54) **PROCESS FOR WATER WETTING OIL-WET SURFACES**
VERFAHREN ZUR WASSERBENETZUNG VON ÖLNASSEN OBERFLÄCHEN
PROCÉDÉ DE MOUILLAGE À L'EAU DE SURFACES MOUILLÉES À L'HUILE

(30) Priority: 23.05.2012 EP 12169110
(43) Date of publication of application: 01.04.2015
(73) Proprietor: BASF SE, 67056 Ludwigshafen am Rhein (DE); BASF Schweiz AG, 4057 Basel (CH)
(72) Inventor: KURKAL-SIEBERT, Vandana, 69117 Heidelberg (DE); OETTER, Günter, 67227 Frankenthal (DE); MAINX, Hans Georg, 42799 Leichlingen (DE); MACK, Sandra, 41352 Korschenbroich (DE)
(74) Representative: BASF IP Association
(86) International application number: PCT/EP2013/059947
(87) International publication number: WO 2013/174679

(56) References cited:
- EP-A1- 2 204 358
- WO-A1-99/67017
- FR-A- 1 244 623

## Description

The present invention relates to a process for water-wetting oil-wet surfaces by applying an aqueous formulation comprising at least one wettability modifier which is a water-soluble ester of an alkoxylated saccharide to the oil-wet surface. The oil-wet surfaces may be any hydrophobic surfaces such as the rocks of subterranean oil-bearing formations.

In natural mineral oil deposits, mineral oil is present in the cavities of porous reservoir rocks which are sealed toward the surface of the earth by impervious top layers. The cavities may be very fine cavities, capillaries, pores or the like. Fine pore necks may, for example, have a diameter of only about 1 µm. As well as mineral oil, including fractions of natural gas, a deposit comprises water with a greater or less salt content.

In mineral oil production, a distinction is generally drawn between primary, secondary and tertiary production.

In primary production, the mineral oil flows, after commencement of drilling of the deposit, of its own accord through the borehole to the surface owing to the autogenous pressure of the deposit. However even in a best-case scenario, only a minor amount of mineral oil present, typically not more than approximately 10 % in the deposit can be produced by primary production.

In secondary production, water may be injected into the deposit in order to maintain the pressure or to increase it again. Such a technique is known as water-flooding. It is the aim of water-flooding to force the mineral oil slowly through the cavities into the formation, proceeding from the injection borehole in the direction of the production borehole.

Techniques of tertiary oil production also known as enhanced oil recovery (EOR) include methods in which suitable chemicals are used as assistants for oil production. For instance, aqueous solutions comprising surfactants and/or thickening polymers may be injected into the formation in order to mobilize oil in the subterranean formation so that additional oil can be recovered from the formation.

One of the crucial points for a proper choice of suitable chemicals to enhance oil production is the nature of the inner surfaces of the mineral oil deposit.

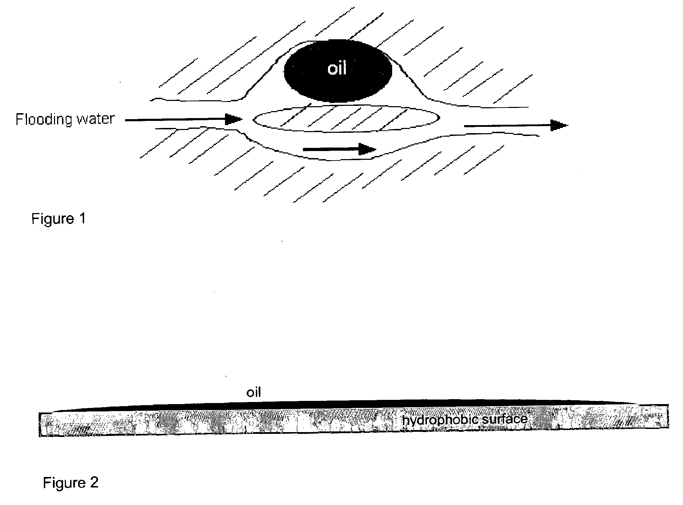

In subterranean oil reservoirs having more or less hydrophilic surfaces such as sandstone reservoirs the surfaces usually are water-wet and droplets of hydrophobic oil can be caught in the pores of the formation if their diameter is greater than the diameter of the capillaries following the pore in flow direction. Said situation is indicated schematically in Figure 1. In such a case suitable surfactants may be used to overcome the capillary forces and decrease the interfacial tension of the oil-water interface so that the oil droplet can be deformed and can be driven out of the pores by the injected aqueous surfactant solution. Surfactants suitable for this technique should cause an ultra-low interfacial tension at the oil-water interface.

In subterranean oil reservoirs having more or less hydrophobic surfaces such as for example carbonate reservoirs oil may be absorbed as very thin film on the inner surfaces of the formation, i.e. the surfaces are oil-wet. This is indicated schematically in Figure 2. The water-permeability of such reservoirs having oil-wet surfaces typically is low due to the negative capillary pressure of water so that already the efficiency of water-flooding is low. In order to enhance oil recovery it is necessary to modify the oil-wet surface into a water-wet one by detaching oil from the oil-wet surface.

It is known in the art to use wettability modifiers for certain techniques in course of oil production.

US 7,256,160 B2 discloses fracturing fluids for hydraulic fracturing of subterranean formations which comprise water wetting control agents. Such wetting control agents may be for instance ethylenglycol monomethyl glycol ether, alkyl sulfates, alkyl sulfonates, or alkyl glucosides.

M. Salehi, S.J. Johnson, and J. Liang, Langmuir 2008, 24, 14099 - 14107 discuss the use of several surfactants such as surfactin, sodium laureth sulphate, and dodecyltrimethylammonium bromide as wettability modifiers for oilfield reservoirs.

US 2010/0163234 A1 discloses a method for treating subterranean formations by injecting a fluid into the formation which comprises a particulate and an organosilane RₙSiX₄₋ₙ wherein R is an organic functional group, and X is halogen, alkoxy, or an acetoxygroup, and n is 1,2, or 3.

WO 2011/086360 A1 discloses treatment fluids for wetting control of multiple rock types which comprise a first surfactant having a charge, a second surfactant having an opposite charge and a compatilizer. The surfactants may be cationic surfactants such as alkyl ammonium chlorides and anionic surfactants such as alkyl ether sulfates and the compatilizer may be selected from various surfactants, including ethoxylated sorbitan fatty acid esters

A. Karimi, Z. Fakhroueian, A. Bahramian, A. P. Khiabani, J. B. Darabad, R. Azin, and S. Ar-ya, Energy & Fuels 2012, 26, 1028 - 1036 disclose the use of nanofluids comprising ZrO₂ nanoparticles and surface active components for wettability alteration in carbonates and for enhanced oil recovery. The formulation studied comprises surfactants based on sorbitane esters.

WO 99/67017 A1 compositions comprising alkoxylated lipophilic polyol compounds, e.g., ethoxylated, esterified methyl glucosides, and method for preparing them which include the steps of alkoxylating the glucoside e. g., glucose or its derivatives with a suitable alkoxylation reagent, e.g ethylene oxide, and introducing a lipophilic substituent, e. g., by esterification with a fatty acid.

EP 2 204 358 A1 discloses a process for making polyol esters (esters of alkoxylated carbohydrates ), comprising transesterifying polyols or their alkoxylation products with fatty acid esters.
As suitable polyols carbohydrates containing 5 to 12 carbon atoms, for example glucose, sucrose, fructose, sorbit, dextrose, maltose, maltotriose or saccharose; and as alkoxylation agent.
Alkoxylation products are adducts of on average 1 to 80 moles ethylene oxide and/or propylene oxide to carbohydrates selected from the group consisting of dextrose, saccharose, maltose and maltotriose.

FR 1 244 623 A discloses discloses a water-based drilling fluid containing an additive to prevent water loss ,comprising an ether and/or ester of a water-soluble polysaccharide, with a water-soluble polymeric synthetic carboxylic acid.

Several publications disclose the use of alkyl polyglucosides for oil field applications. Examples comprise WO 92/02594 A1, WO 2006/026732 A1, US 4,985,154, or WO 2009/124922.

Y. Wu, S. Iglauer, P. Shuler, Y. Tang, and W.A. Goddard, Tenside, Surfactants Detergents 47(5) (2010), 280 - 280 disclose formulations of alkyl polyglucosides and sorbitan esters for improved oil recovery.

Wettabilty modfiers for oilfield applications need to fulfil a number of requirements based on the specific conditions prevailing in subterranean oil formations such as high temperatures and the existence of reservoir water having a high salt content with additional challenge arising from the presence of divalent ions such as Mg²⁺ or Ca²⁺.

WO 2010/069518 A1 discloses a process for producing polyol esters by transesterification of polyols or their alkoxylation products. The reaction is carried out in the presence of reducing mineral acids or organic acids as catalysts. In particular, the process is suitable for making products based on heat-sensitive starting materials such as saccharose. Furthermore, WO 2010/069518 A1 discloses esters of ethoxylated and/or propoxylated dextrose, saccharose, maltose and maltotriose which were made available the first time using the new process. The publication discloses several uses of the polyol esters obtained, however not the use in oilfield applications.

It is an object of the invention to provide an improved process for water wetting oil-wet surfaces, in particular oil-wet surfaces of subterranean oil-bearing formations.

Correspondingly, a process for water-wetting oil-wet surfaces has been found which comprises at least a step of contacting the oil-wet surface with an aqueous formulation comprising at least one water-soluble wettability modifier, wherein at least one of the wettability modifiers is an ester of alkoxylated saccharide having the general formula Z-(-O-C(O)-R¹)ₙ (I), wherein Z represents an alkoxylated mono- , di- , or trisaccharide moiety of pentoses and/or hexoses alkoxylated with from 4 to 80 alkylene oxide units selected from the group of ethylene oxide, propylene oxide, or butylene oxide units, with the proviso that at least 50 % of the alkylene oxide units are ethylene oxide units, n is a number ≥ 1, and R¹ is an aliphatic linear or branched, saturated or unsaturated hydrocarbon moiety having from 6 to 30 carbon atoms.

In a preferred embodiment of the invention, the process is applied in course of oil production.

In another preferred embodiment of the invention, the process is a process for enhanced oil recovery wherein the aqueous formulation is injected into the subterranean oil-bearing formation comprising oil and formation water through an injection well, the injected water flows through the subterranean formation towards a production well, thereby detaching oil from the oil-wet surfaces of the formation, and producing a mixture comprising oil and water from the formation through a production well.

Surprisingly, it has been found that the esters of alkoxylated saccharides used as wettability modifiers have an excellent performance at temperatures above 50°C and at high salinity.

### List of figures

- Figure 1: Oil bearing formation with water-wet surface (schematically)
- Figure 2: Oil-bearing formation with oil-wet surface (schematically)
- Figure 3: Detachment of oil from an oil-wet surface in course of water-wetting an oil-wet surface (schematically).

With regard to the invention, the following should be stated specifically:

### Wettability modifiers used in the process

The wettability-modifiers used in the process of the present invention are water-soluble fatty acid esters of alkoxylated mono- , di- , or trisaccharides.

The monosaccharides are pentoses or hexoses, preferably hexoses and in the same manner the units of the di- or trisaccharides are pentose units and/or hexose units, preferably hexose units. Accordingly, the mono- , di- , or trisaccharides contain from 5 to 18 carbon atoms, preferably from 6 to 18 carbon atoms. The monosaccharides may be aldoses and/or ketoses. Preferably, the saccharides are mono- or disaccharides and very preferably, the saccharides are disaccharides.

Examples of suitable mono- , di- , or trisaccharides include monosaccharides such as arabinose, ribose, xylose, glucose, mannose, galactose, fructose, disaccharides such as maltose (2 glucose units), lactose (one galactose unit + one glucose unit) or saccharose (one glucose unit + one fructose unit) or trisaccharides such as maltotriose (3 glucose units).

Preferred saccharides are glucose, saccharose, maltose, and maltotriose and particularly preferred is saccharose.

The mono- , di- , or trisaccharides are alkoxylated with from 4 to 80 alkylene oxide units selected from the group of ethylene oxide, propylene oxide, and butylene oxide units, preferably from the group of ethylene oxide and propylene oxide units, with the proviso that at least 50 % of the total number of alkylene oxide units are ethylene oxide units. Preferably, at least 70 % and very preferably at least 90 % of the alkylene oxide units are ethylene oxide units and in the most preferred embodiment only ethylene oxide units are used. Using other alkylene oxides units besides ethylene oxide units may be used to fine tune the hydrophilicity of the alkoxylated saccharide esters to be used. The alkoxylation products may show a blockwise or statistical distribution of the alkylene oxide units.

Preferably, the mono- , di-, or trisaccharides are alkoxylated with from 8 to 50 alkylene oxide units, more preferably with from 10 to 45 alkylene oxide units and most preferably with from 12 to 40 alkylene oxide units.

The fatty acid esters may be represented schematically by the formula Z-(-O-C(O)-R¹)ₙ (I). In formula (I) Z represents an alkoxylated mono- , di-, or trisaccharide moiety as described above, n the number of ester groups, and R¹ an aliphatic linear or branched, saturated or unsaturated hydrocarbon moiety having from 6 to 30 carbon atoms, preferably from 8 to 30 carbon atoms, more preferably from 8 to 22 carbon atoms and most preferably from 12 to 18 carbon atoms. R¹ may optionally be substituted by OH-groups. If R¹ is an unsaturated aliphatic residue the number of double bonds preferably is from 1 to 3 double. n represents the number of ester groups in the molecule and has a number ≥ 1. It goes without saying that n cannot exceed the number of OH-groups present in the saccharides used, i.e. in case of a trisaccharide of three hexoses such as maltotriose n cannot exceed 11, in case of a disaccharide of two hexoses saccharose the number cannot exceed 8. In other words, n is from 1 to 11. Preferably, n is from 1 to 4 and most preferably n is 1 or 2.

Examples of ester groups R¹-C(O)-O- comprise ester groups derived from lauric acid, myrystic acid, palmitic acid, palmoleic acid, stearic acid, isostearic acid, oleic acid, elaidinic acid, linoleic acic, conjugated linoleic acid, linolenic acid, 12-hydroxy stearic acid, ricinoleic acid, gadoleic acid, arachidonic acid, behenic acid, and erucic acid.

The wettability modifiers to be used according to the invention are water-soluble. They may be miscible with water at all proportions, however for the process it is sufficient that the wettability modifiers are soluble at the intended concentration of use and the given salinity of the water. In general, the wettability modifier should have a water solubility of at least 0.1 % by weight, preferably at least 1 % by weight at 20°C in the aqueous formulation to be used for the process according to the invention.

The kind and number of alkylene oxide units as well as the kind and number of ester groups may be selected by the skilled artisan according to the requirements of the process. In any case it needs to be ensured that the wettability modifiers are water soluble at the concentration used in the process. The skilled artisan knows how to deal with that problem. The more ester groups are used and the larger R¹ the more hydrophobic the ester and the more ethylene oxide groups the more hydrophilic the ester. Consequently, the greater the number of ester groups the greater should be also the number of ethylene oxide units in order to ensure sufficient water solubility.

Preferred water-soluble wettability modifiers for use in the process of the present invention are esters based on alkoxylated saccharose. Preferably, saccharose is alkoxylated with from 8 to 50 ethylene and/or propylene oxide units, more preferably with from 12 to 45 ethylene and/or propylene oxide units and most preferably with from 15 to 40 ethylene oxide and/or propylene units with the proviso that at least 50 % of the total number of alkylene oxide units are ethylene oxide units. Preferably, at least 70 % and very preferably at least 90 % of the alkylene oxide units are ethylene oxide units and in the most preferred embodiment only ethylene oxide units are used. Preferably mono- or diesters are used, i.e. n is 1 or 2, and R¹ as defined above has 8 to 22 carbon atoms and more preferably from 12 to 18 carbon atoms.

Particularly preferred for the present process are monoesters of alkoxylated saccharose wherein the alkoxylated saccharose comprises from 15 to 25 ethylene oxide units, for example about 20 ethylene oxide units, and R¹ as defined above has 12 to 18 carbon atoms, preferably 16 to 18 carbon atoms, e.g. saccharose * 20 EO-monooleate.

Also particularly preferred for the present process are diesters of alkoxylated saccharose wherein the alkoxylated saccharose comprises from 25 to 45 ethylene oxide units, for example about 30 to 40 ethylene oxide units, and R¹ as defined above has 10 to 18 carbon atoms, preferably 12 to 14 carbon atoms, e.g. saccharose * 40 EO - dilaurate.

### Manufacture of the wettability modifiers

For the manufacture of the esters in a first step mono- , di- , or trisaccharides are alkoxylated according to procedures known to the skilled artisan.

In a preferred embodiment of the invention the alkoxylation may be performed according to the procedure disclosed in EP 2 072 523 A1, i.e. by alkoxylating the saccharides with ethylene oxide and optionally higher alkylene oxides in aqueous solution at 90°C to 160°C, preferably 100°C to 140°C and at a pressure of 1 bar to 5 bar. As catalysts hydroxides such as potassium hydroxide or sodium hydroxide may be used. After the reaction, the reactor is cooled and the alkaline catalyst neutralized using an organic acid, for example lactic acid. Some polyalkyleneoxides may be formed as a byproduct of the alkoxylation but the procedure disclosed by EP 2 072 523 A1 ensures that their amount is only low.

In a second step the alkoxylated polysaccharides are esterified in order to obtain the above-mentioned esters. Techniques for esterification are known to the skilled artisan.

In a preferred embodiment the esterification is performed by transesterification, preferably according to the procedures described in WO 2010/069518 A1.

In general, transesterification means the reaction of an alcohol ROH with an ester R'COOR" in the following manner: ROH + R'COOR" -----> R'COOR + R"OH. R"OH usually is a highly voilatile alcohol which can be easily removed from the reactor. According to the procedure described in WO 2010/069518 A1 the transesterification is carried out in the presence of alkali or earth-alkali salts of reducing acids as a catalyst.

Preferably, the transesterification catalysts may be selected from the group consisting of
(i) alkali- and/or earth-alkali salts of sulfuric or sulfonic acids with an oxidation value of sulfur of less than 6,
(ii) alkali- and/or earth-alkali salts of phosphoric or phosphonic acids with an oxidation value of phosphor of less than 5.

Typical examples comprise alkali- and/or earth-alkali salts of sulfurous acid, dithionic acid, sulfinic acid and organic sulfinic acid, phosphorous acid, diphosphorous acid, hypophosphorous acid, and hypodiphosphorous acid. Preferred salts are potassium salts.

Using the salts of reducing acids permits to conduct the transesterification under milder conditions, in particular lower temperatures and neutral pH value. Such conditions are in particular suitable for transesterification of the somewhat heat-sensitive saccharides to be used in the present invention.

Suitable fatty acid esters for reaction with the alkoxylated saccharides are of the formula R¹CO-OR² (II), wherein R¹ has the meaning as defined above and R² represents an alkyl radical having 1 to about 6 carbon atoms or the residue of glycerol. Perferably, R² stands for a methyl group. The fatty acid esters suitable to be used in the inventive process therefore represent either alkyl esters or (mono/di/tri) glycerides.

Typical examples of suitable esters R¹CO-OR² (II) may be chosen from methyl, ethyl, propyl, butyl, pentyl or hexyl esters, preferably the methyl esters of capronic acid, caprylic acid, caprinic acid, lauric acid, myrystic acid, palmitic acid, palmoleic acid, stearic acid, isostearic acid, oleic acid, elaidinic acid, linoleic acic, conjugated linoleic acid, linolenic acid, 12-hydroxy stearic acid, ricinoleic acid, gadoleic acid, arachidonic acid, behenic acid, Erucic acid and their technical mixtures like for example tallow acid, coco fatty acid, palm fatty acid, sunflower acid, or soy acid. Instead of the alkyl esters mono-, di- and/or triglycerides of the same fatty acids can also be used for transesterification. Finally, it is also possible to use natural fats and oils, for example sunflower or soy oil for the same purpose.

The transesterification may be conducted in the usual manner known from organic chemistry. Typically the ester (II) is used in excess. The salts used as catalysts may be prepared in-situ: Stoichiometrical amounts of mineral acid and alkali hydroxide are added to a mixture of the alkoxylated saccharide and the ester (II).
The catalysts may be used in concentrations of about 0.05 to about 1 % by weight, preferably about 0.1 to about 0.5 % by weight calculated on the starting materials for transesterification. The reaction may be preferably performed at a pH-value of from 6 to 8.5. Once the catalyst has been added, the mixture is heated up to the final temperature either under nitrogen or vacuum, depending on the reactants. Suitable reaction temperatures are in the range of about 120 to about 200 °C, preferably about 150 to about 180 °C. It is preferred to conduct the transesterification under reduced pressure, for example 1 to about 300 mbar and preferably about 10 to about 100 mbar.

### Aqueous formulations

For the process according to the present invention an aqueous formulation comprising at least one wettability modifier of the general formula Z-(-O-C(O)-R¹)ₙ (I) as described in detail above is used. Of course, two or more wettability modifiers of formula (I) may be used.

Besides water the aqueous formulation may also comprise organic solvents miscible with water. Examples of such solvents comprise alcohols such as ethanol, n-propanol, i-propanol or butyldiglycol. If organic solvents are present their amount should not exceed 50 % by weight with respect to all solvents present in the formulation, preferably it should not exceed 25 % by weight. In a preferred embodiment of the invention only water is used as solvent.

The water used may be saline water comprising dissolved salts. Examples of salts comprise halogenides, in particular chlorides, sulfates, borates of mono- or divalent cations such as Li⁺, Na⁺, K⁺, Mg²⁺, Ca²⁺, Sr²⁺, or Ba²⁺. The salinity of the water may be from 10,000 ppm to 230,000 ppm.

The concentration of the wettability modifiers according to formula (I) may be from 0.01 % to 10 % by weight with respect to the total of all constituents of the aqueous formulation, preferably from 0.1 % to 5 % by weight and very preferably from 0.5 % to 5 % by weight.

The aqueous formulation may comprise further constituents such as anionic, cationic, nonionic and amphoteric surfactants as well as polymers, inorganic salts like sodium chloride or potassium chloride and alkali like sodium hydroxide or sodium hydrogen carbonate. Of course, also wettability modifiers different from those of formula (I) may be used. The amount of each of such further constituents may be from 0.01 % to 10 % by weight.

The aqueous formulation may be made by mixing water, the wettability modifier according to the present invention and optionally further components. The water used may be fresh water but also sea water or formation water may be used, i.e. more or less saline water. It is one of the advantages of the wettability modifiers used for the process according to the invention that they show good results in saline water.

Usually, the wettability modifier is provided as concentrated aqueous solution which is used to mix the aqueous formulation to be used directly at the location of use, e.g. on the oilfield.

### Process for water wetting oil-wet surfaces

The process for water-wetting oil-wet surfaces according to the present invention comprises at least the step of contacting an oil-wet surface with an aqueous formulation comprising at least a water-soluble wettability modifier of formula (I) as described above.

The term "oil" as used herein in usual manner stands for organic liquids which are not soluble in water and which have a high boiling point, e.g. a boiling point of not less than 150°C, preferably not less than 200°C. Oils may be oils from natural sources or synthetic oils. Oils preferred within the scope of the present invention are crude oils.

It goes without saying for the skilled artisan that a surface which is oil-wet will be more or less hydrophobic. The degree of hydrophobicity may be determined in the usual manner by measuring the contact angle of the oil on the surface. Usually, the contact angle should be from 0° to 30°, preferably from 0° to 10° and most preferably about 0°. The oil may cover the surface completely, for instance it may form a continuous film on the surface or only a part of the surface may be covered with oil.

The surface may be any kind of surface which can be wetted with oils, such as crude oil, synthetic oil or oily formulations, e.g. the surfaces of hydrophobic polymers, such as polyethylene surfaces or steel or alloy surfaces used in well drilling and in pipelines. In particular, oil-wet surfaces include any surfaces which are or may come into contact with any kind of oily formulation or crude oil in the process of producing and transporting oil, such as the surfaces of subterranean oil-bearing formations, in particular the inner surfaces of pores, cavities, and capillaries of the subterranean, oil-bearing formation, wellbores with or without casing, equipment or installations for the production and transport of crude oils. Furthermore, oil-wet surfaces include the surfaces of scales deposited on other surfaces. Scales may be carbonate scales, such as calcium or magnesium carbonate scales, sulfate scales such as calcium sulfate scales. In a preferred embodiment of the invention such scales are deposited on surfaces on equipment and installations for the production and transport of crude oil, e.g. on the surface of casings, pumping rods, or pipelines.

In a preferred embodiment of the invention oil-wet surfaces may be the inner surfaces of subterranean oil-bearing formations, in particular formations which comprise carbonate rocks and/or formations which consist of carbonate rocks, in particular calcite and dolomite rocks. For the process of the present invention the oil-wet surface is contacted with an aqueous formulation comprising at least a water-soluble wettability modifier as described above. It goes without saying that the technique for contacting oil-wet surfaces with the aqueous formulation depends on the nature of the object having an oil-wet surface, for instance whether the object has an inner or an outer surface or whether it is mobile or not. By the way of example, contacting may be done by spraying the formulation onto the surface or by submerging an object having an oil-wet surface into the aqueous formulation. The latter of course is only possible for surfaces of mobile objects. If the surfaces are inner surfaces of devices the formulation may be poured or injected into such device.

If the surfaces are oil-wet surfaces of subterranean formations, the aqueous formulation may be injected into the subterranean formation. injection may be carried out by injecting the aqueous formulation into injections wells or into production wells drilled into the formation.

The injection is performed by the skilled artisan at a pressure sufficient to allow the aqueous formulation to penetrate into the formation.

After contacting the oil-wet surface with the aqueous formulation it is advisable to allow the aqueous formulation to act on the surface for some time. It goes without saying for the skilled artisan that the time may depend on factors including the temperature, the concentration of the components in the formulation, the oil or the nature of the surface. The time of the treatment may vary from seconds to several hours.

The temperature in course of the treatment of the oil-wet surface may be from 20°C to 150°C, preferably from 40°C to 100°C. In some case the temperature may be selected by the skilled artisan, e.g. by selecting a certain temperature for the aqueous formulation. In the case of subterranean formations the aqueous formulation may be injected into the formation at room temperature or at higher temperatures and after injection into the formation the temperature of the aqueous formulation injected will approach the formation temperature.

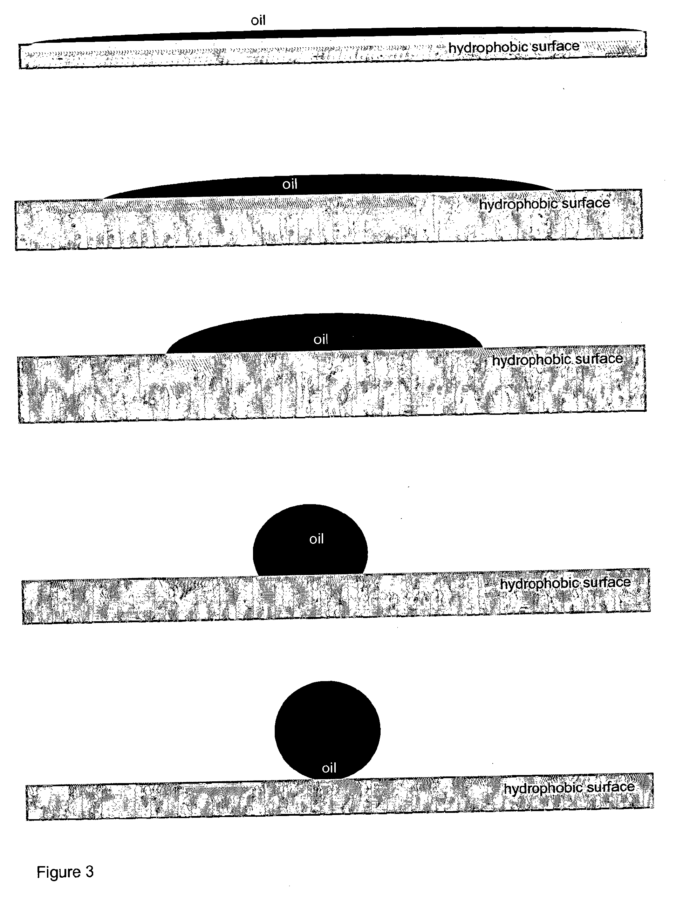

In course of the treatment of the oil-wet surface the surface becomes more hydrophilic. This process can be monitored by contact angle measurements. The contact angle between the surface and the oil becomes larger and larger and finally drops of oil may become detached form the surface. Said process is illustrated schematically in figure 3.

In preferred embodiments of the invention, the process according to the invention is applied in course of oil production. In such processes of oil production it is usually combined with further process steps.

In a first preferred embodiment of the process according to the invention the oil-wet surfaces are surfaces of the rocks of subterranean oil-bearing formations comprising oil and formation water. Preferably, rocks of the subterranean oil-bearing formation comprise carbonate rocks. The formation water usually is brine and its salinity may be from 10,000 ppm to 230,000 ppm. The temperature of the formation may be from 20°C to 150°C, preferably from 40°C to 100°C. For executing the first preferred embodiment an aqueous formulation comprising at least a wettability modifier as described above is injected into the subterranean formation.

In a second preferred embodiment the process is a process for enhanced oil recovery. The oil-wet surfaces are surfaces of the rocks of a subterranean oil-bearing formations comprising oil and formation water. Preferably, rocks of the subterranean oil-bearing formation comprise carbonate rocks. The formation water usually is brine and its salinity may be from 10,000 ppm to 230,000 ppm. The temperature of the formation may be from 20°C to 150°C, preferably from 40°C to 100°C. The oil-bearing formation comprises at least one injection well and at least one production well. The aqueous formulation is injected into the subterranean formation through at least one injection well under a pressure sufficient so that the injected water flows through the subterranean formation towards at least one production well. Thereby it comes into contact with oil-wet surfaces of the formation and under the influence of the wettability modifier the surface becomes more and more water-wet. As a consequence spontaneous imbibition of the water into the capillaries of the carbonate rock due to capillary forces takes place and oil is pressed out of the capillaries. The mixture comprising oil and water from the formation flows to the production well where it can be extracted to the surface.

In a following step the produced mixture of crude oil and formation water is separated in the usual manner into a phase of crude oil and of formation water. This may be done using usual equipment and optionally usual demulsifiers as process aids.

In a preferred embodiment of the process for enhanced oil recovery the separated saline formation water may be used for making the aqueous formulation comprising the wettability modifier. Only formation water may be used or saline water mixed with fresh water or sea water may be used. The aqueous formulation comprising salts may thereafter be injected through the injection well into the formation thereby recycling at least a part of the formation water. This is an economic advantage in particular for oil production on land where it is difficult to dispose formation water.

In a third preferred embodiment the process is a hydraulic fracturing process. The aqueous formulation is injected into the subterranean oil-bearing formation through a production well. Preferably, rocks of the subterranean oil-bearing formation comprise carbonate rocks. The temperature of the formation and the salinity of the formation water may be as described above. In course of the treatment of the formation oil-wet surfaces become water-wetted. In a second step, an aqueous fracturing fluid comprising thickening components is injected through the production well. The injection is done at a pressure sufficient to fracture the rocks of the formation. Said fractures are usually formed in a zone around the production well. Through the fractures formed oil may flow from the formation to the production well thus allowing an increased oil production.

The process of fracturing and suitable fracturing fluids for use in fracturing are known to the skilled artisan. Suitable examples of fracturing fluids are disclosed in WO 2011/012164 A1. Besides thickening components, fracturing fluids may comprise so called proppants. Proppants are small hard particles which cause that formed fractures do not close after removing the pressure. The step of water wetting oil-wet surfaces before injecting the fracturing fluid improves the penetration of the aqueous fracturing fluid into the formation thereby improving the process of forming fractures.

In a fourth preferred embodiment the process is an acidizing process. The aqueous formulation is injected into the subterranean oil-bearing formation through a production well. Preferably, rocks of the subterranean oil-bearing formation comprise carbonate rocks. The temperature of the formation and the salinity of the formation water may be as described above. In course of the treatment of the formation oil-wet surfaces become water-wetted. In a second step, an aqueous acid formulation is injected through the production well. The acid dissolves scale and may form new cavities, pores and the like in the formation thereby creating new channels for the oil to flow from the formation to the production well thus increasing oil production.

In a fifth preferred embodiment the process is a process for the removal of scale in course of oil-production. The oil-wet surfaces are the surfaces of scale deposited in an oil-bearing formation and/or a wellbore and/or oil production equipment. In a first step the oil-surfaces of the scale is treated with the aqueous formulation comprising a wettability modifier and the oil-wet surfaces become water wet. In a second step the scale is treated with an aqueous formulation comprising at least one scale inhibitor thereby removing or at least reducing scale. Water-wetting the surfaces before treating with the scale inhibitor significantly improves the efficiency of the scale removal.

The invention is illustrated in detail by the examples which follow.

In the examples, the following wettability modifiers were studied:

| Compound | Chemical description |
|---|---|
| S 1 | Saccharose* 20 EO monoester with C₁₆/C₁₈ fatty acid |
| S 2 | Saccharose * 40 EO diester with C₁₂/C₁₈ fatty acid |

| | |
|---|---|
| EO = ethylene oxide | |

### Step 1: Alkoxylation

For the synthesis of the compounds saccharose ethoxylated with 20 ethylene oxide units (20 moles ethylene oxide per 1 mole saccharose) and saccharose ethoxylated with 40 moles ethylene oxide was used. The alkoxylation was performed according to the procedure disclosed by EP 2 072 523 A1.

### General procedure:

An almost saturated solution of saccharose in water and 0.5 % (calculated on educts) of an aqueous potassium hydroxide solution (50 % by weight) are placed in a stirred autoclave. Once the reactor was three times evacuated and purged with nitrogen to remove all traces of oxygen, the mixture is heated to about 125 °C and within about 3.5 h the calculated amount of ethylene oxide is added, while the pressure should rise to about 5.5 bars. Subsequently the mixture is left for another 30 min for post reaction, maintaining the temperature at about 130 °C. Finally, the reactor has to be cooled down to room temperature, vacuum is broken and the pH of the products should be adjusted to about 7 by adding a lactic acid solution. The liquid thus obtained comprises ethoxylated saccharose and water. At higher ethoxylation degrees, some polyethylene glycol may be formed as well.

### Step 2: Transesterification

The esters were manufactured by transesterification of the ethoxylated saccharose in the presence of potassium hypophosphite as catalyst according to the procedures described in WO 2010/069518 A1, in particular example 1. For compound 1, a technical grade C₁₆1C₁₈ fatty acid methyl ester was used for transesterification and for compound 2 a technical lauric oil based C₁₂/C₁₈ fatty acid methyl ester (peak C₁₂/C₁₄) was used.

### General procedure:

0.5 mol alkoxylated saccharose is mixed with the calculated amount of methyl ester and 15 g of a 25 % solution of potassium hypophosphite. The mixture is set under a 300 mbar vacuum and heated up slowly under stirring to 180°C. After the removal of the water (deriving from the ethoxylated saccharose) the reaction starts vigorously at a temperature of about 140 - 150 °C. After the removal of the first large amount of methanol the vacuum is slowly reduced to < 1 mbar and the reaction mixture is kept under these conditions for another 3 - 4 hours. After finished reaction time the final ester is cooled down and can be used as is without further treatment.

### Application tests

### Solubility tests:

Solubility tests revealed that both compounds S1 and S2 form clear solutions at a concentration of 1% by wt. in water having a salinity of 10.000 ppm and 100.000 ppm for temperatures of at least 95°C.

For comparative purposes, two conventional surfactants were tested at a concentration of 1% in water having a salinity of 50.000 ppm NaCl and in the usual manner their cloud point was determined.

C₁₃-alcohol + 20 EO Cloud point of 86°C

C_{16/18}-alcohol + 80 EO Cloud point of 87°C

Surface tension (ST) and critical micelle formation concentration (cmc)

The surface tension was measured as a function of the concentration of the surface active components using the DuNouy ring method (according to Din 53914). The critical micelle formation concentration (cmc) was derived in the usual manner from the measurement graph.

In order to simulate the prevailing conditions in subterranean formations measurements were performed at 25°C and at 60°C in water having a salinity of 10.000 ppm and 100.000 ppm. The salts used were NaCl and CaCl₂ at a weight ratio of 9 : 1 NaCl/CaCl₂.

The results are summarized in table 1.

### Interfacial tension (IFT)

The interfacial tension between aqueous solutions of tested compounds and an oil phase were measured with a spinning drop tensiometer (DataPhysics). As the composition of crude oils may vary decane, dodecane, and hexadecane were used as model oils in order to study the range of application of the tested compounds. Tests were performed in water having a salinity of 10.000 ppm and 100.000 ppm (NaCl / CaCl₂ at a weight ratio of 9:1) and also at 25°C and at 60°C. The results are summarized in table 1.

### Modification of the wettability of rocks

Polyethylene platelets (3 cm x 2 cm) were use as hydrophobic model surfaces for oil wet rocks. As a first step, 5 µl decane or 5 µl dodecane were applied to the polyethylene platelets. The hydrophobic liquids spread on the hydrophobic surface. The contact angle between the oil and the polyethylene surface was measured using a usual contact angle measuring device (DataPhysics) and consequently a value of 0° was obtained. The oil wet platelets were submerged into an aqueous solution of 1 g/l by weight of the compound to be tested. Tests were performed in water having a salinity of 10.000 ppm and 100.000 ppm (NaCl / CaCl₂ at a weight ratio of 9:1) and also at 25°C and at 60°C. The contact angle between oil and the polyethylene surface was measured as function of time. Furthermore, it was inspected visually whether oil droplets became detached from the surface. The results are summarized in table 2.

**Table 1: Tests of cmc, IFT, and ST**

| **Surfactant** | **T [°C]** | **Brine conc. [ppm]** | **cmc [g/l]** | **ST [mN/m] At 1 g/l** | **IFT [mN/m] after 10 min without sample** | **IFT [mN/m] after 60 min 1 g/l of sample in aqueous phase** | | |
|---|---|---|---|---|---|---|---|---|
| | | | | | **decane** | **decane** | **docecane** | **hexadecane** |
| S1 | 25 | 10,000 | 0.03 | 33.7 | 38 | 3.9 | 2.9 | 4.0 |
| S1 | 60 | 10,000 | 0.03 | 29.6 | 46 | 0.45 | 0.19 | 0.55 |
| S1 | 25 | 100,000 | 0.02 | 34.5 | 31 | 2.4 | - | - |
| S1 | 60 | 100,000 | 0.02 | 29.1 | 48 | 1.2 | - | - |
| S2 | 25 | 10,000 | 0.03 | 34.6 | 38 | 2.3 | 2.0 | 2.2 |
| S2 | 60 | 10,000 | 0.04 | 27.7 | 46 | 0.46 | 0.34 | 0.40 |
| S2 | 25 | 100,000 | 0.03 | 34.6 | 31 | 2.1 | - | - |
| S2 | 60 | 100,000 | 0.02 | 28.3 | 48 | 0.36 | - | - |

| | | | | | | | | |
|---|---|---|---|---|---|---|---|---|
| cmc: Critical micelle formation concentration Brine conc.: Concentration of brine NaCl / CaCl₂ (9:1) ST: Surface tension IFT: Interfacial tension | | | | | | | | |

**Table 2: Wettability modification using surfactant S1 at 25°C (polyethylene platelets, oil: dodecane, brine NaCl / CaCl₂ (9:1))**

| **Time [min]** | **Contact angle [°]** | | | |
|---|---|---|---|---|
| | **Brine conc. 10,000 ppm without S1** | **Brine conc. 10,000 ppm + 1 g/l S1** | **Brine conc. 100,000 ppm without S1** | **Brine conc. 100,000 ppm + 1 g/l S1** |
| 0 | 0 | | 6 0 | 7 |
| 30 | 0 | 13 | 0 | 26 |
| 45 | 0 | 14 | 0 | 74 |
| 60 | 0 | 17 | 0 | oil already detached |
| 90 | 0 | 22 | 0 | - |
| 180 | 0 | beginning detachment of oil | 0 | - |

**Table 3: Wettability modification using surfactant S1 at 60°C (polyethylene platelets, oil: dodecane, brine NaCl / CaCl₂ (9:1))**

| **Time [min]** | **Contact angle [°]** | | | |
|---|---|---|---|---|
| | **Brine conc. 10,000 ppm without S1** | **Brine conc. 10,000 ppm +1 g/l S1** | **Brine conc. 100,000 ppm without S1** | **Brine conc. 100,000 ppm + 1 g/l S1** |
| 0 | 0 | -1 | 0 | oil already detached after 2 min |
| 30 | 0 | -1 | 0 | - |
| 45 | 0 | -1 | 0 | - |
| 60 | 0 | beginning detachment of oil | 0 | - |

| | | | | |
|---|---|---|---|---|
| ¹ No definite value due to fluctuations of the measured numbers | | | | |

Table 1 shows that the wettability modifier S1 has a low critical micelle formation concentration (cmc), i.e. it is already surface active at low concentrations. Furthermore, the cmc is 0,03 g/l at 25°C and at 60°C (at a salinity of 10,000 ppm) and 0,02 g/l at 25°C and at 60°C (at a salinity of 100,000 ppm), i.e. the cmc is not depending on the temperature in the studied range. Said behavior is advantageous for use in subterranean oil-bearing formations which might not have a constant formation temperature but there may be temperature gradients. In particular, temperature gradients may be caused by ongoing water-flooding a formation. In the vicinity of the injection well the temperature usually becomes lowered. In the opposite manner, ongoing steam-flooding usually increases the temperature in the vicinity of the injection well. Also the dependence of the cmc on the salinity is not too pronounced. Such a behavior also is advantageous in oil formations, e.g. when fresh water has been used for making the aqueous formulation and later the formulation comes into contact with saline water.
The wettability modifier S2 has a similar behavior as compared to S1.

The interfacial tension (IFT) between water and hydrocarbons of different chain lengths decreases significantly by addition of the wettability modifier S1. The different hydrocarbons serve to study the influence of different types of oil. There is no strong influence of the nature of the hydrocarbon used which also is advantageous for oilfield uses.

Table 2 demonstrates the performance of the wettability modifier S1 for water wetting oil-wet surfaces. Without wettability modifier no oil is detached from the surface. With the wettability modifiers used according to the present invention the contact angle of the oil on the polyethylene surface increases over time and finally oil becomes detached from the surface. The detachment of oil is quicker at 60°C than at 25°C and it is quicker at a brine concentration of 100,000 ppm than at 10,000 ppm. At 60°C and at 1000,000 ppm the oil is already detached from the surface after only 2 min of contact. These experimental data strongly support the suitability of the wettability modifiers of the present invention for applications in the oilfield.

## Claims

1. Process for water-wetting oil-wet surfaces at least comprising a step of contacting the oil-wet surface with an aqueous formulation comprising at least a water-soluble wettability modifier,
wherein at least one of the wettability modifiers is an ester of an alkoxylated saccharide having the general formula Z-(-O-C(O)-R¹)ₙ (I), wherein Z represents an alkoxylated mono- , di- , or trisaccharide moiety of pentoses and/or hexoses alkoxylated with from 4 to 80 alkylene oxide units selected from the group of ethylene oxide, propylene oxide, or butylene oxide units, with the proviso that at least 50 % of the alkylene oxide units are ethylene oxide units, n is a number ≥ 1, and R¹ is an aliphatic linear or branched, saturated or unsaturated hydrocarbon moiety having from 6 to 30 carbon atoms.

2. Process according to claim 1, wherein the alkoxylated saccharide moieties are selected from the group of alkoxylated glucose, alkoxylated saccharose, alkoxylated maltose, and alkoxylated maltotriose.

3. Process according to claim 1, wherein the alkoxylated saccharide moiety is an alkoxylated saccharose moiety.

4. Process according to claim 3, wherein the saccharose moiety is alkoxylated with from 8 to 50 ethylene oxide and/or propylene oxide units with the proviso that at least 50 % of the units are ethylene oxide units, and n is a number of from 1 to 4.

5. Process according to claim 3, wherein the saccharose moiety is alkoxylated with from 12 to 45 ethylene oxide and/or propylene oxide units with the proviso that at least 70 % of the units are ethylene oxide units, and n is a number of 1 or 2.

6. Process according to any of claims 1 to 5, wherein the concentration of the wettability modifier in the aqueous formulation is from 0.01 % by weight to 10 % by weight.

7. Process according to any of claims 1 to 6, wherein the process is applied in course of oil production.

8. Process according to any one of the claims 1 to 6, wherein the oil-wet surfaces are surfaces of the rocks of subterranean oil-bearing formations comprising oil and formation water and wherein the aqueous formulation is injected into the subterranean formation.

9. Process according to claim 8, wherein the rocks of the subterranean oil-bearing formation comprise carbonate rocks.

10. Process according to claim 8 or 9, wherein the process is a process for enhanced oil recovery, wherein the aqueous formulation is injected into the subterranean oil-bearing formation comprising oil and formation water through an injection well, the injected water flows through the subterranean formation towards a production well, thereby detaching oil from the oil-wet surfaces of the formation, and producing a mixture comprising oil and water from the formation through a production well.

11. Process according to any of claims 8 to 10, wherein the temperature of the formation is from 20°C to 150°C.

12. Process according to any of claims 8 to 10, wherein the temperature of the formation is from 40°C to 100°C.

13. Process according to any of claims 8 to 12, wherein the formation comprises formation water having a salinity of from 10,000 ppm to 230,000 ppm.

14. Process according to any of claims 10 to 13, wherein the oil-water mixture produced from the formation is separated into an oil phase and a water phase, the separated water is used for making the aqueous formulation comprising the wettability modifier and the aqueous formulation is injected through the injection well into the formation.

15. Process according to claim 8 or 9, wherein the process is a hydraulic fracturing process, wherein the aqueous formulation is injected into the subterranean oil-bearing formation through a production well, followed by the injection of an aqueous fracturing fluid comprising at least thickening components at a pressure sufficient to fracture the rocks of the formation.

16. Process according to claim 8 or 9, wherein the process is an acidizing process, wherein the aqueous formulation is injected into the subterranean oil-bearing formation through a production well, followed by the injection of an aqueous acid formulation.

17. Process according to claim 7, wherein the oil-wet surfaces are the surfaces of scale deposited in an oil-bearing formation and/or a wellbore and/or oil production equipment, wherein after the treatment of the scale with the aqueous formulation comprising a wettability modifier are treated with an aqueous formulation comprising at least one scale inhibitor.

## Patentansprüche

1. Verfahren zur Benetzung von ölnassen Oberflächen mit Wasser, das mindestens einen Schritt umfasst, bei dem man die ölnasse Oberfläche mit einer wässrigen Formulierung, die mindestens einen wasserlöslichen Benetzbarkeitsmodifikator umfasst, in Berührung bringt,
wobei es sich bei mindestens einem der Benetzbarkeitsmodifikatoren um einen Ester eines alkoxylierten Saccharids der allgemeinen Formel Z-(-O-C(O)-R¹)ₙ (I) handelt, wobei Z für eine alkoxylierte Mono-, Di- oder Trisaccharidgruppierung von Pentosen und/oder Hexosen, die mit 4 bis 80 Alkylenoxid-Einheiten aus der Gruppe von Ethylenoxid-, Propylenoxid- oder Butylenoxid-Einheiten alkoxyliert ist, steht, mit der Maßgabe, dass es sich bei mindestens 50% der Alkylenoxid-Einheiten um Ethylenoxid-Einheiten handelt, n für eine Zahl ≥ 1 steht und R¹ für eine aliphatische lineare oder verzweigte, gesättigte oder ungesättigte Kohlenwasserstoffgruppierung mit 6 bis 30 Kohlenstoffatomen steht.

2. Verfahren nach Anspruch 1, wobei die alkoxylierten Saccharidgruppierungen aus der Gruppe alkoxylierte Glucose, alkoxylierte Saccharose, alkoxylierte Maltose und alkoxylierte Maltotriose ausgewählt sind.

3. Verfahren nach Anspruch 1, wobei es sich bei der alkoxylierten Saccharidgruppierung um eine alkoxylierte Saccharosegruppierung handelt.

4. Verfahren nach Anspruch 3, wobei die Saccharosegruppierung mit 8 bis 50 Ethylenoxid- und/oder Propylenoxid-Einheiten alkoxyliert ist, mit der Maßgabe, dass es sich bei mindestens 50% der Einheiten um Ethylenoxid-Einheiten handelt, und n für eine Zahl von 1 bis 4 steht.

5. Verfahren nach Anspruch 3, wobei die Saccharosegruppierung mit 12 bis 45 Ethylenoxid- und/oder Propylenoxid-Einheiten alkoxyliert ist, mit der Maßgabe, dass es sich bei mindestens 70% der Einheiten um Ethylenoxid-Einheiten handelt, und n für eine Zahl mit einem Wert von 1 oder 2 steht.

6. Verfahren nach einem der Ansprüche 1 bis 5, wobei die Konzentration des Benetzbarkeitsmodifikators in der wässrigen Formulierung 0,01 Gew.-% bis 10 Gew.-% beträgt.

7. Verfahren nach einem der Ansprüche 1 bis 6, wobei das Verfahren im Lauf der Ölförderung angewendet wird.

8. Verfahren nach einem der Ansprüche 1 bis 6, wobei es sich bei den ölnassen Oberflächen um Oberflächen des Gesteins von unterirdischen ölführenden Formationen, die Öl und Formationswasser umfassen, handelt und wobei die wässrige Formulierung in die unterirdische Formation eingepresst wird.

9. Verfahren nach Anspruch 8, wobei das Gestein der unterirdischen ölführenden Formation Carbonatgestein umfasst.

10. Verfahren nach Anspruch 8 oder 9, wobei es sich bei dem Verfahren um ein Verfahren zur tertiären Erdölgewinnung handelt, wobei die wässrige Formulierung durch eine Injektionsbohrung in die unterirdische ölführende Formation, die Öl und Formationswasser umfasst, eingepresst wird, das eingepresste Wasser durch die unterirdische Formation zu einer Produktionsbohrung strömt, wodurch Öl von den ölnassen Oberflächen der Formation abgelöst wird, und durch eine Produktionsbohrung eine Mischung, die Öl und Wasser umfasst, aus der Formation gefördert wird.

11. Verfahren nach einem der Ansprüche 8 bis 10, wobei die Temperatur der Formation 20°C bis 150°C beträgt.

12. Verfahren nach einem der Ansprüche 8 bis 10, wobei die Temperatur der Formation 40°C bis 100°C beträgt.

13. Verfahren nach einem der Ansprüche 8 bis 12, wobei die Formation Formationswasser mit einem Salzgehalt von 10.000 ppm bis 230.000 ppm umfasst.

14. Verfahren nach einem der Ansprüche 10 bis 13, wobei die aus der Formation geförderte Öl-Wasser-Mischung in eine Ölphase und eine Wasserphase getrennt wird, das abgetrennte Wasser zur Herstellung der wässrigen Formulierung, die den Benetzbarkeitsmodifikator umfasst, verwendet wird und die wässrige Formulierung durch die Injektionsbohrung in die Formation eingepresst wird.

15. Verfahren nach Anspruch 8 oder 9, wobei es sich bei dem Verfahren um ein Hydraulic-Fracturing-Verfahren handelt, wobei die wässrige Formulierung durch eine Produktionsbohrung in die unterirdische ölführende Formation eingepresst wird und dann ein wässriges Fracturing-Fluid, das zumindest verdickende Komponenten umfasst, bei einem zum Aufbrechen des Gesteins der Formation ausreichenden Druck eingepresst wird.

16. Verfahren nach Anspruch 8 oder 9, wobei es sich bei dem Verfahren um ein Säuerungsverfahren handelt, wobei die wässrige Formulierung durch eine Produktionsbohrung in die unterirdische ölführende Formation eingepresst wird und dann eine wässrige Säureformulierung eingepresst wird.

17. Verfahren nach Anspruch 7, bei dem es sich bei den ölnassen Oberflächen um die Oberflächen von Ablagerungen in einer ölführenden Formation und/oder einem Bohrloch und/oder Ölförderungseinrichtungen handelt, bei dem nach der Behandlung der Ablagerungen mit der wässrigen Formulierung, die einen Benetzbarkeitsmodifikator umfasst, mit einer wässrigen Formulierung, die mindestens einen Ablagerungshemmer umfasst, behandelt werden.

## Revendications

1. Procédé pour mouiller à l'eau des surfaces mouillées par du pétrole, comprenant au moins une étape consistant à mettre en contact la surface mouillée par du pétrole avec une formulation aqueuse comprenant au moins un agent de modification de la mouillabilité soluble dans l'eau, au moins un des agents de modification de la mouillabilité étant un ester d'un saccharide alcoxylé présentant la formule générale Z-(-O-C(O)-R¹)ₙ (I), dans laquelle Z représente un fragment alcoxylé de monosaccharide, de disaccharide ou de trisaccharide de pentoses et/ou d'hexoses, alcoxylé par 4 à 80 motifs d'oxyde d'alkylène, choisis dans le groupe constitué par les motifs d'oxyde d'éthylène, d'oxyde de propylène ou d'oxyde de butylène, à condition qu'au moins 50% des motifs d'oxyde d'alkylène soient des motifs d'oxyde d'éthylène, n représente un nombre ≥ 1 et R¹ représente un fragment hydrocarboné aliphatique, linéaire ou ramifié, saturé ou insaturé, comprenant 6 à 30 atomes de carbone.

2. Procédé selon la revendication 1, les fragments alcoxylés de saccharide étant choisis dans le groupe formé par le glucose alcoxylé, le saccharose alcoxylé, le maltose alcoxylé et le maltotriose alcoxylé.

3. Procédé selon la revendication 1, le fragment alcoxylé de saccharide étant un fragment alcoxylé de saccharose.

4. Procédé selon la revendication 3, le fragment de saccharose étant alcoxylé par 8 à 50 motifs d'oxyde d'éthylène et/ou d'oxyde de propylène, à condition qu'au moins 50% des motifs soient des motifs d'oxyde d'éthylène et n représente un nombre de 1 à 4.

5. Procédé selon la revendication 3, le fragment de saccharose étant alcoxylé par 12 à 45 motifs d'oxyde d'éthylène et/ou d'oxyde de propylène, à condition qu'au moins 70% des motifs soient des motifs d'oxyde d'éthylène et n représente le nombre 1 ou 2.

6. Procédé selon l'une quelconque des revendications 1 à 5, la concentration en agent de modification de la mouillabilité dans la formulation aqueuse étant de 0,01% en poids à 10% en poids.

7. Procédé selon l'une quelconque des revendications 1 à 6, le procédé étant mis en oeuvre au cours de la production de pétrole.

8. Procédé selon l'une quelconque des revendications 1 à 6, le surface mouillée par du pétrole consistant en des surfaces des roches de formations souterraines pétrolifères comprenant du pétrole et de l'eau de formation et la formulation aqueuse étant injectée dans la formation souterraine.

9. Procédé selon la revendication 8, les roches de la formation souterraine pétrolifère comprenant des roches carbonatées.

10. Procédé selon la revendication 8 ou 9, le procédé étant un procédé pour la récupération augmentée de pétrole, la formulation aqueuse étant injectée dans la formation souterraine pétrolifère comprenant du pétrole et de l'eau de formation via un puits d'injection, l'eau injectée s'écoulant au travers de la formation souterraine vers un puits de production, détachant ainsi le pétrole des surfaces mouillées par le pétrole de la formation et produisant un mélange comprenant du pétrole et de l'eau à partir de la formation via un puits de production.

11. Procédé selon l'une quelconque des revendications 8 à 10, la température de la formation étant de 20°C à 150°C.

12. Procédé selon l'une quelconque des revendications 8 à 10, la température de la formation étant de 40°C à 100°C.

13. Procédé selon l'une quelconque des revendications 8 à 12, la formation comprenant de l'eau de formation présentant une salinité de 10.000 ppm à 230.000 ppm.

14. Procédé selon l'une quelconque des revendications 10 à 13, le mélange pétrole-eau produit à partir de la formation étant séparé en une phase de pétrole et une phase aqueuse, l'eau séparée étant utilisée pour préparer la formulation aqueuse comprenant l'agent de modification de la mouillabilité et la formulation aqueuse étant injectée au travers du puits d'injection dans la formation.

15. Procédé selon la revendication 8 ou 9, le procédé étant un procédé de fracturation hydraulique, la formulation aqueuse étant injectée dans la formation souterraine pétrolifère via un puits de production, puis un fluide aqueux de fracturation comprenant au moins des constituants épaississants étant injecté à une pression suffisante pour fracturer les roches de la formation.

16. Procédé selon la revendication 8 ou 9, le procédé étant un procédé d'acidification, la formulation aqueuse étant injectée dans la formation souterraine pétrolifère via un puits de production, puis un fluide aqueux acide étant injecté.

17. Procédé selon la revendication 7, les surfaces mouillées par le pétrole étant les surfaces d'incrustations, déposées dans une formation pétrolifère et/ou un puits et/ou un équipement de production de pétrole, dans lequel, après le traitement des incrustations par la formulation aqueuse comprenant un agent de modification de la mouillabilité, sont traitées par une formulation aqueuse comprenant au moins un inhibiteur d'incrustations.
